# EUROPEAN PATENT APPLICATION

(11) **EP 1 102 219 A1**
(43) Date of publication of application: **23.05.2001**
(21) Application number: 00310379.3
(22) Date of filing: 22.11.2000
(51) Int. Cl.: G07F 7/10, G06K 19/077

(54) **Improvements in authentication cards**

(30) Priority: 22.11.1999 CA 2290184
(71) Applicant: Tel+Système Inc., Quebec City, Quebec G1K 3P6 (CA)
(72) Inventor: Perron, David, Quebec City, Quebec, G1P 4H9 (CA); Yahyaoui, Mohamed, Quebec City, Quebec, G1K 2Y5 (CA)
(74) Representative: Orr, William McLean

(57) **Abstract**

This invention relates to authentication cards, that is, cards usually of the dimensional format established for "smart cards" which provide data to a terminal for the purpose of establishing the authorization of the holder of the card to use the terminal. An aspect of the invention is a card incorporating a microcontroller, a contact interface in accordance with ISO 7816, and an acoustic interface for outputting FSK modulated data using telephone voice-based frequencies, wherein the microcontroller generates an internal clock signal, but the contact interface is synchronised by an external clock signal received through the interface, when communicating through the latter, and the microcontroller utilizes the internally generated clock signal to generate frequencies used when communicating through the acoustic interface, the FSK modulation being characterized by the ratio of the frequencies used rather than the absolute frequencies. Another aspect of the invention is a membrane switch comprising three superposed membranes supported within a recess in the card such that the inner membrane and substantial portions of the peripheries of the outer and spacer membranes are independently supported by the material of the card. Another aspect of the invention is the mounting of a disk-type acoustic transducer element within a cavity defined within a core layer of the card (the core being sandwiched between two outer layers) using conductive elastomeric bodies to provide electric connections to the transducer element without substantially dampening resonance of the transducer. A still further aspect of the invention provides programmable non-volatile memory in the microcontroller and additional contacts connected to programming leadouts of the microcontroller for use in programming that memory.

## Description

This invention relates to authentication cards, that is, cards usually of the dimensional format established for "smart cards" in International Standard ISO 7816, which cards provide data to a terminal for the purpose of establishing the authorization of the holder of the card to use the terminal.

In order to establish authorization, or authenticate a user, the card must be able to deliver authentication data to the terminal. This may be achieved in various ways. The most general technique currently employed uses a magnetic stripe on the card, the data content of which can be read (and in some instances modified) by the terminal. Other known techniques involve the use of a potentially bidirectional electrical interface to electronic circuitry in the card, such as the interface established by ISO 7816 and utilized in so-called "smart" cards. Yet further techniques utilize an acoustic interface operating at telephone voice frequencies, enabling communication between the card and a terminal by acoustic coupling through a telephone hand set, or a radio interface permitting radio frequency communication. Various cards have been proposed utilizing more than one of these techniques for achieving communication with different types of terminal interface.

Standard magnetic striped cards have a thickness of 0.76 mm. This limited thickness presents difficulties in implementing active electronic circuitry within the card which is sufficiently robust and durable, and can be adequately powered to provide authenticated terminal communication. A smart card communicating through an ISO interface can be powered and controlled from a terminal designed to communicate with such cards and thus necessitates only incorporation of the contact interface and a controller chip, but a card designed to achieve acoustic coupling with a terminal must include an internal power source, i.e., a battery, an acoustic transducer, and means for activating the controller so that a significant drain on the battery occurs only when the card is being used. Even when a card is magnetically or electrically coupled to a terminal, it may be desirable for security reasons only to activate the card during use, as by entry of a PIN (Personal Identification Number). Robust but effective transducer arrangements and switch elements are difficult to achieve economically, within a thickness of 0.76 mm, while it is important that current drain from the very thin batteries that can be accommodated within such a thin card be minimized. Furthermore, it must be possible to fabricate such cards in an economical manner.

The present invention is concerned with addressing these requirements in an authentication card incorporating means for acoustic coupling with a terminal, and/or manually operated switching means for activating the card for communication with a terminal.

The invention in a first aspect provides an authentication card incorporating a membrane switch of the type comprising three superposed membranes, a central portion of a lower surface of an outer membrane carrying a conductive contact layer, a central portion of an upper surface of an inner membrane carrying a conductive contact layer, and an annular spacer membrane serving normally to hold the contact layers apart; wherein the outer membrane overlaps the spacer membrane over at least a greater part of its periphery, and the spacer membrane overlaps the inner membrane over at least a greater part of its periphery, and the membranes are supported within a recess in the card such that the inner membrane and substantial portions of the peripheries of the outer and spacer membranes are independently supported by the material of the card.

The invention in a second aspect provides an authentication card incorporating a core layer sandwiched between two outer layers, a cavity being defined within the core layer and closed by at least one of said outer layers, a disk-type acoustic transducer element having a piezoelectric element concentrically mounted on a metal backing, and conductive elastomeric bodies mounting said transducer element within the cavity to provide electric connections thereto without substantially dampening resonance of the transducer.

The invention in a third aspect provides an authentication card incorporating a microcontroller, a contact interface in accordance with ISO 7816, and an acoustic interface for outputting FSK modulated data using telephone voice-based frequencies, wherein the microcontroller receives an external clock signal through the ISO 7816 interface, when communicating through the latter, and generates a clock signal internally when communicating through the acoustic interface. The FSK modulation is characterized by the ratio of the frequencies used rather than the absolute frequencies.

The invention in a further aspect provides an authentication card incorporating an ISO 7816 interface, wherein the card incorporates a microcontroller having programmable non-volatile memory, and wherein the ISO 7816 interface incorporates additional contacts connected to programming leadouts of the microcontroller.

The invention in a presently preferred form incorporates all of the above features.

Further features of the invention will be apparent from the following description of a preferred embodiment thereof:

### IN THE DRAWINGS

Figure 1 is a plan view of a card in accordance with the invention;
Figure 2 is a side elevation of the card, with its thickness exaggerated to facilitate illustration;
Figure 3 is a schematic circuit diagram of the card;
Figure 4 is a circuit board layout of the card, showing also certain principal components;
Figure 5 is fragmentary enlargement of part of Figure 4;
Figure 6 is a vertical section through a switch, with the vertical scale exaggerated;
Figures 7 and 8 are plan views of components of the switch of Figure 6;
Figure 9 is a vertical section through one embodiment of transducer, with the vertical scale exaggerated;
Figure 10 is a plan view of the transducer element showing the placement thereon of conductive adhesive;
Figure 11 is a fragmentary cross-sectional view of an alternative embodiment of transducer installation; and
Figure 12 is a flow diagram illustrating the recovery of data from acoustic signals generated by the card.

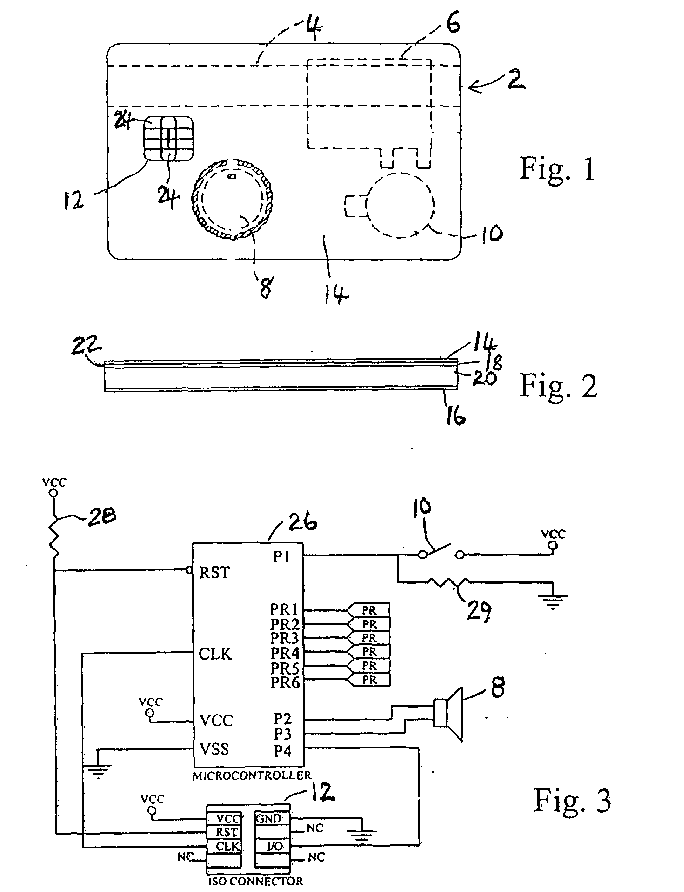

Referring to Figures 1 and 2, a preferred embodiment of an authentication card 2 in accordance with the invention has physical dimensions in accordance with those set forth in ISO 7816, i.e., those of a conventional credit card. In particular, if a magnetic data carrying stripe 4 on the back of the card is to be read reliably by readers used in terminals intended to interface with cards having such a stripe, the card must have a thickness of about 0.76 mm.

Housed within the card are a battery 6, an acoustic element 8, a switch 10, a microcontroller die (not seen in Figure 1) mounted behind an ISO 7816 connector 12. The connector includes contact surfaces in an area presenting through a front surface layer 14 of the card, and wiring (not shown) connecting the various parts. The card in this embodiment is of laminar construction (see Figure 2), comprising the front layer 14, a rear layer 16, a circuit board layer 18 and a core layer 20. The layers may be connected by layers of adhesive, such as the layer 22.

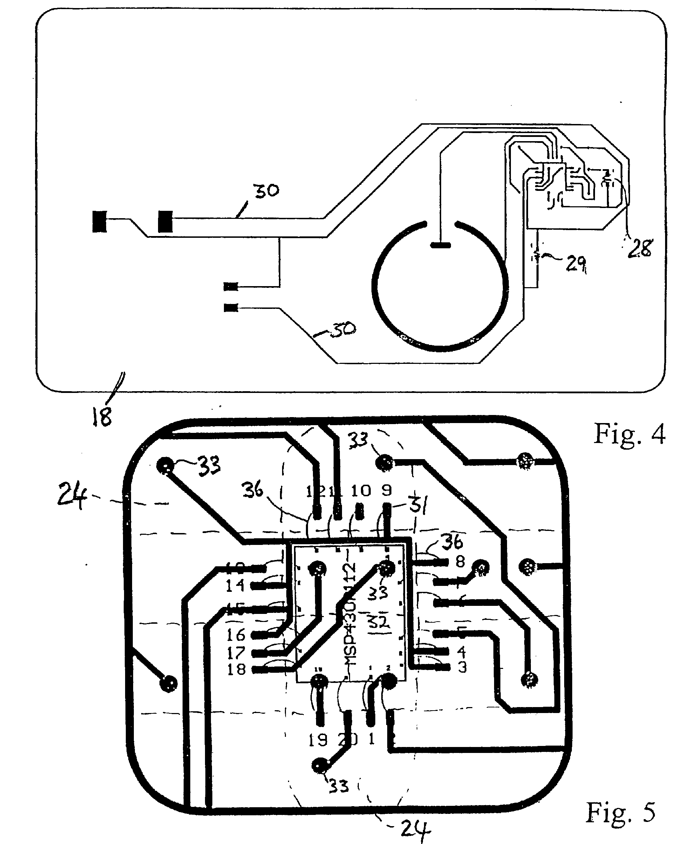

A schematic diagram of the card is shown in Figure 3. The battery 6 is connected between the Vcc and ground terminals shown in the diagram. In the embodiment shown in Figure 1, the contact surfaces 24 of the ISO connector include six supernumerary contact surfaces (see Figure 5) which are connected to those terminals of the microcontroller 26 which are labelled PR. The microcontroller utilized in this embodiment is of type MSP430P1 12. In this chip, non-volatile memory is provided which is programmable utilizing the supernumerary contact surfaces of the ISO connector, but in production cards such programming capability is not required, in which case, the mask programmed microcontroller type MSP430C1 12 may be substituted and the additional contact surfaces and associated wiring may be omitted. A reset terminal of the microcontroller 26 is provided with a pull-up resistor 28, to provide a power-on reset, and one input-output line, P1, has a pull-down resistor 29, in series with the switch 10 to enable actuation of the switch to be sensed. Rather than using an external time base reference such as a crystal, the clock frequency of the microcontroller is set internally utilizing programmed resistors internal to the microcontroller. Further information relating to the specified microcontroller family and its programming may be found in a data sheet "MSP430x11 x Mixed Signal Microcontrollers" published in 1999 by Texas Instruments.

The transducer element 8 is connected directly to lines P2 and P3 of the microcontroller programmed as output lines and operated as described further below.

Referring now to Figures 4 and 5, these show the layout of wiring on the lower surface of the circuit board layer 18, together with the battery 6, a transducer element 8 and switch 10 mounted to the layer with contacts overlaying ends of certain wiring traces. The wiring traces 30 are advantageously laid out by the automated laying of antenna wire of annealed copper or other metal having essentially no plastic memory, the wire being laid in an adhesive layer on the lower surface of the circuit layer, or fused into that layer. The wire extends to pads 31 on the circuit layer, associated with the microcontroller die 32, and to resistors 28 and 29, and is fed to the drillings in the layer 18 so that connection may be made to the contact pads 33 of the connector 12 to the contact surfaces 24 on the upper side of the ISO connector. Jumper wires 36 establish connections between leadouts on the die 32 and the associated pads 31. Although this "antenna wire" technology is presently preferred, other circuit board fabrication techniques may be viable.

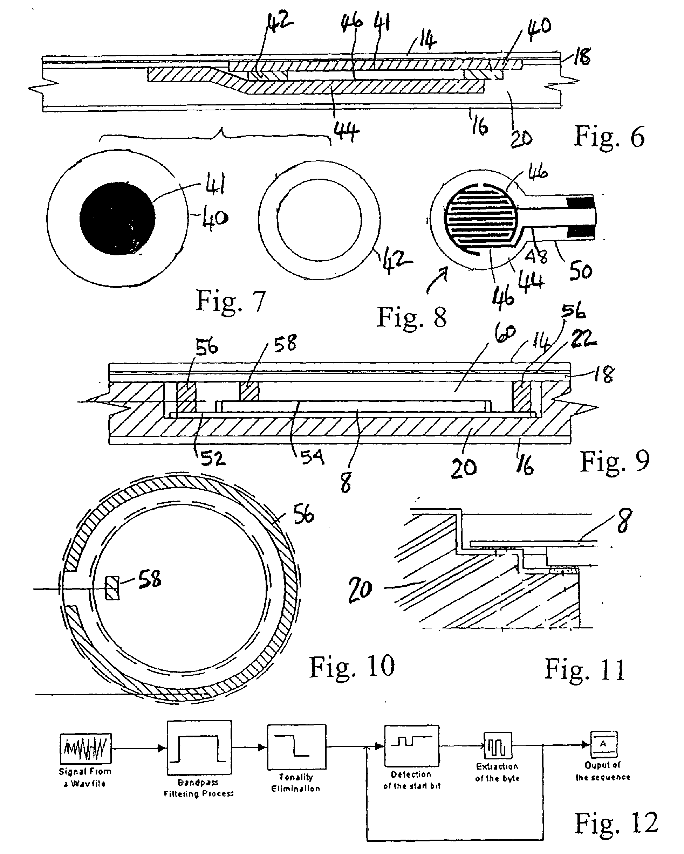

Referring to Figures 6 to 8, the construction of the switch 10 is shown. Although membrane switches are well known, their implementation in thin cards presents special problems. In the structure shown, the switch is formed by three superposed layers of synthetic plastic film, an upper contact layer 40, a spacer layer 42, and a second contact layer 44. Each successive layer moving downwards is somewhat smaller than the superposed layer, so that the latter overlaps it to provide a stepped configuration in which at least part of the periphery of each layer is supported on, and preferably bonded to, the material of core layer 20, thus providing very secure support for the switch within the core layer. The layer 40 projects, in the example shown, through an aperture in the circuit board layer 18, but is covered by the front upper layer 14.

The layer 40 has a central portion provided on its underside with a conductive metallization 41, while the layer 44 has two interdigitated patterns 46, 48 of metallization extended along a tab 50 to terminals for contacting the appropriate traces 30 (see Figure 4).

In the above arrangement, pressure on the layer 14 above the layer 40 depresses the latter so that the metallization 41 bridges portions of the interdigitated patterns and completes a circuit through the switch. Each of the layers 40, 42 and 44 is independently supported by the layer 20, while the tab 50 isolates the connections to the traces 30 from deformations applied to the switch.

Although the layers 40, 42 and 44 are shown concentric, less symmetric arrangements are possible. For example, the edge of the layers could be aligned along a portion of the perimeter of the device in order to facilitate assembly. Although the embodiment described employs but a single switch, multiple devices of similar construction could be employed to form a keypad. In this case, rather than simply switching on the card, the switching could be used to enter a PIN (Personal Identification Number) which, once verified, would activate the card for a finite period sufficient to enable data to be transmitted through an acoustic interface, or the ISO interface.

Figures 9 and 10 show the installation of the acoustic transducer element 8. The latter is a conventional piezoelectric transducer which deforms in flexural mode, i.e., dishes in alternate directions, responsive to application of an alternating potential at a suitable frequency between its electrodes 52 and 54. The element 8 rests on the bottom of a recess in layer 20 in which it is located by beads of electrically conductive elastomer 56 and 58 connecting the electrodes to traces 30 on the layer 16. The bead 56 supports most of the periphery of the element 8 whereas the bead 58 is comparatively small so as to minimize damping of the element and allow for relatively independent action of the element. As such, the layers 14 and 16 merely form an acoustic coupling between the chamber 60, within which the element 8 is enclosed, and the ambient air.

Figure 11 illustrates an alternative transducer mounting. Here the element 8 is supported on ledges formed in the layer 20 with electrical contact being established through pads 62, 64 of conductive elastomer. The element 8 is better supported in that neither face of the transducer is normally in contact with the layer 20 except at its periphery, but it is more vulnerable to extreme deformation of either outer layer of the card.

In manufacture of the card, the circuit board layer 18 is drilled with a pattern of holes aligned with the pads 33, as best seen in Figure 5, prior to being laid out with the traces 30 by application of antenna wire to an adhesive layer on the underside of layer 18, with the ends of certain traces being bonded to contacts 33 on the back of the contact surfaces 24 of the ISO connector 12 through the holes. The microcontroller die is wire-bonded to the pads 31 on the underside of the layer, and the major components (battery, switch, transducer, resistors) are picked, placed and solder-bonded to the traces 30. If the microcontroller is not mask-programmed, it should be noted that it will start drawing significant current as soon as connections are established to the battery, and it is therefore important that it be at least partially programmed as soon as possible so that it may be placed in a low power mode in which its current consumption is negligible. Accordingly, as soon as the battery is connected, the layer 18 is bonded to the layer 14, so that the ISO connector 12 presents through an aperture in the layer 14. The lower surface layer 16 is now bonded to the circuit board layer through the core layer 20, which is preferably preformed with an opening forming a chamber around the piezoelectric transducer element 8, but otherwise conforms during the bonding process to support the components mounted on the underside of layer 18, so as to form a completed card which can be inserted in a programming device, if the microcontroller is unprogrammed, for programming using the connections from the programming terminals of the chip to the supernumerary contact surfaces 24 on connector 12. This programming should be at least sufficient to place the microcontroller in a low power mode in which its current consumption is negligible, pending further programming. Unwanted current drain on the battery is thus avoided. The exemplified microcontroller has low power modes in one of which it draws only 0.1 microamp.

The various layers of the card may be made of any suitable synthetic plastic material. The layers 14 and 16 should be wear-resistant and capable of carrying printed material, printed or embossed identification numerals, magnetic stripe material, and so on, as is well known in the art. These layers may themselves be laminated. These and the remaining layers should be of materials which will bond satisfactorily to each other or to adhesive layers between then and it may be preferred to use polyester resins rather than the more usual polyvinyl chloride. The upper layer 14 at least should have substantial acoustic transparency.

The non-volatile memory of the microcontroller 26 may be programmed to provide desired functionality of the card in communicating with a terminal, such communication typically being through either an ISO 7816 interface or an acoustic interface including the transducer element 8, and to personalize the card with unique data used in the authentication process. As indicated above, the programming of the chip is such as to default it to a very low power consumption state in which the energy storage of the battery 6 is ample to last for the life of the card. Since the content of random access memory 13 is maintained in this state, it is preferred that at least some of the authentication data be stored in random access memory such that any attempt to open up the card which interrupts the connections to the battery will result in loss of this data.

If the card is used with a terminal having a smart card reader, the connections established through the interface 12 cause the card to be "woken up" on insertion in the reader and the microcontroller to operate in normal mode, drawing power through the interface, and to execute an authentication routine, the details of which form no part of the present invention. In this ISO mode, the serial interface of the microcontroller is synchronized by an external clock signal supplied through the ISO interface to terminal CLK. In the absence of the external clock signal, operation of the microcontroller reverts to its lower power state.

If the card is to be used with an acoustic interface through a telephone handset, a dial-up connection to the terminal is established, the upper surface of the card is located adjacent the hand piece microphone, and the switch 10 is operated by finger pressure of the user to apply a signal to line P1 of the microcontroller. This "wakes up" the microcontroller and initiates a routine in which an encoded authentication sequence generated by the microcontroller is transformed into a modulated acoustic signal having a frequency spectrum with the voice board of a telephone handset, which signal is applied to the transducer 8. The generation of the authentication sequence forms no part of the present invention and will not be described further.

It will be noted from the circuit of Figure 3 that the microcontroller is not associated with any external frequency reference such as a crystal or resonator, except through the ISO interface, if used. When an acoustic interface is used, it must instead rely on an internally implemented resistance-capacitance circuit, which in practice can only maintain a clock frequency within a tolerance of about 20%. Since the frequency of signals generated by the microcontroller and applied to the transducer 8 will be divided from the microcontroller clock, it follows that such frequencies are subject to significant variation from card to card. Accordingly, it is not practical to utilize a data modulation scheme which relies upon the generation of precise frequencies. This rules out the use of DTMF encoding, which has been proposed in the past for cards used for dialing purposes, nor can a synchronous interface be used. On the other hand, we have found that it is possible to utilize FSK (Frequency Shift Keying) modulation provided that the terminal is equipped to recognize the presence in a received signal of two frequencies having a predetermined ratio rather than predetermined absolute values.

A presently preferred technique for reading FSK signals at a terminal is illustrated in Figure 12. A received signal sequence from the card is sampled and stored, for example, as a WAV file, and then filtered to eliminate frequency components outside a pass band within which the keying frequencies may be expected to fall. The filter may be implemented as an adaptive filter operative to narrow the pass band on the basis of the spectrum of the received signal if this is found to be advantageous.

The filtered signal will consist essentially of portions in which one or other or two frequencies, or no frequency, will be dominant, corresponding respectively to the two FSK modulation frequencies, and a silence represented by no frequency, and the signal is demodulated on this basis (tonality elimination).

Assuming, for example, that the data is encoded in the form (for each byte of data) F _ xxxxxxxx _ where F represents a period of FSK high frequency, _ is a period of silence, and X is a period of FSK high or low frequency, it is now possible to detect the start bit of a byte and decode the bits of the byte represented by xxxxxxxx. The first byte of a transmitted sequence represents the number of bytes in the sequence, so the decoding process may be reiterated the number of times necessary to recover the complete data sequence.

In order to generate the FSK signal, data to be modulated is arranged in a suitable format of high, low and absent bits, each represented by equal periods. During high bits, the clock frequency of the microprocessor is divided to generate a high FSK frequency of, for example, approximately 2 kHz, which, during low bits, the clock frequency is divided to produce a frequency which is, for example, 75% of the high FSK frequency, e.g., about 1.5 kHz, i.e., a ratio of 4:3. Opposite phases of these signals are applied to the lines P 2-2 and P 2-3 of the microcontroller which, in turn, are connected to the transducer 8. Because of the capacitance of the transducer, the use of two counterphase driver lines results in an effective doubling of the potential applied to the transducer, thus increasing its acoustic output. No signals are applied to these lines in the absence of high or low bits in the sequence. Because of the reactance of the transducer, the actual waveform produced by the latter will be complex, but the harmonics of the FSK frequencies which remain present in the audio output of the transducer are largely eliminated by the bandpass filter at the terminal. There is no need for the output from the transducer in any way to approach a sine wave and in practice it does not do so.

It should be understood that the implementations of many of the features of the above presently preferred embodiment are exemplary only, and considerable variation is possible within the scope of the invention, various features of which may be used independently or in different combination. For example, the disclosed structure of the switch 10 may, as already mentioned, be utilized to implement keypads on authentication cards, whether or not these implement an acoustic interface, while the described acoustic interface may be utilized in cards which do not include an ISO 7816 interface.

## Claims

1. An authentication card incorporating an ISO 7816 interface, wherein the card incorporates a microcontroller having programmable non-volatile memory, and wherein the ISO 7816 interface incorporates additional contacts connected to programming leadouts of the microcontroller.

2. An authentication card incorporating any or all of the novel features of the preferred embodiment of the card described herein.
